# EUROPEAN PATENT SPECIFICATION

(11) **EP 2 374 600 B1**
(45) Date of publication and mention of the grant of the patent: **26.03.2014**
(21) Application number: 10159622.9
(22) Date of filing: 12.04.2010
(51) Int. Cl.: B29C 47/64, B29C 47/40, B29B 7/48, B29C 47/60, B29C 47/38

(54) **Kneading disk with tapered crest surface**
Knetscheibe mit Kegelkammfläche
Disque de malaxage doté d'une surface de crête biseautée

(43) Date of publication of application: 12.10.2011
(73) Proprietor: Borealis AG, 1220 Vienna (AT)
(72) Inventor: Hristov, Velichko, 4040, Linz (AT); Jarzombek, Manfred, 4040, Linz (AT)
(74) Representative: Maiwald Patentanwalts GmbH

(56) References cited:
- EP-A2- 0 848 988
- DE-U1- 29 901 899
- US-A- 6 116 770
- US-A1- 2007 177 451

## Description

### FIELD OF THE INVENTION

The invention relates to the field of polymer extrusion. In particular, the invention relates to a kneading disk for a screw extruder according to claim 1, a screw extruder according to claim 1, a use of a kneading disk for a screw extruder according to claim 1, a method of mixing a first material and a second material with a screw extruder according to claim 12 and a kneading block according to claim 13.

### BACKGROUND OF THE INVENTION

Screw extrusion may be used for mixing, compounding or reacting polymeric materials, like, for example, polyethylene or dough for noodles. The polymer material may be placed into a hopper of a screw extruder which has at least one screw for conveying the polymer material into the direction of a die. A screw extruder may have a special mixing means in the path of the conveyed material. The mixing means is adapted for mixing the polymer material, for example in the case, when the polymer material comprises two or more components. Such mixing means may be a barrel in which at least one kneading disk is rotating. The at least one kneading disk may be driven by the same shaft which drives the screw for conveying the polymer material.

Screw extruders may have only one screw. But there are screw extruders with two three or even more screws, which may be aligned parallel.

In a twin screw extruder two parallel aligned screws are conveying the polymer material to the die. Also a twin screw extruder may have special mixing means with kneading disks. Twin screw extruders can further be categorized into co-rotating machines with both screws rotating in the same direction, and counter-rotating machines. Kneading disks are typically applied in co-rotating twin screw extruders.

Screw extruders and kneading disks with different designs are for example known from US 6 116 770, US 6 170 975, US 5 487 602, DE 299 01 899 U1 and EP 0 848 988 A2.

### SUMMARY OF THE INVENTION

However, the processing of polymer materials having a bi- or multimodal molecular weight distribution, for example, when the polymer material comprises polymer compounds with different molecular weights, may be accompanied by problems in dispersion and homogenization of the high molecular weight fraction within the low molecular weight continuous phase, especially on a co-rotating twin screw extruder. A poor homogenization may result in product inconsistency, fluctuation of processing parameters, gels and deterioration of mechanical properties. This may be due to a very high viscosity ratio. Additionally, shear within a polymer material may be very ineffective for mixing polymers having a viscosity ratio of more than 4.

In order to get efficient dispersion of the minor high viscous component, elongational flow passages may be created in the processing equipment, in particular inside the barrel containing the kneading disks. In a co-rotating twin screw extruder this may be achieved by using a kneading block (an arrangement of at least two kneading disks on a shaft).

However, the using of a dispersive kneading block with high shear may lead to excessive shear and degradation of the polymer material. Such degradation may be due to chain scission of long polymer chains, which may occur because of excessive viscous heating in clearances between the kneading disks and the extruder barrel. For example, there may be a more than 50 to 100 times higher shear rate in the flight clearance than in the extruder channel.

The object of the present invention is to provide a screw extruder that is adapted to effectively mix polymers without degrading the polymers.

This object is solved by the subject-matter of the independent claims. Exemplary embodiments of the invention are evident from the dependent claims.

A first aspect relates to a kneading disk for a screw extruder, in particular a twin screw extruder, preferably a co-rotating twin screw extruder.

According to the invention, the kneading disk has at least one lobe extending radially from an axis of rotation of the kneading disk. For example, the kneading disk may be placed on a shaft of the screw extruder, which may also rotate the screw of the screw extruder for conveying the polymer material. The shaft and therefore the kneading disk and also the screw may be rotated around the axis of the rotation.

The kneading disk may be adapted for rotating inside a barrel of the screw extruder about the axis of rotation.

According to the invention, the lobe has a crest surface limited by a first edge, a second edge opposite to the first edge, a third edge connecting the first edge and the second edge, and a fourth edge connecting the first edge and the second edge. When the kneading disk is situated inside the extruder barrel of the screw extruder, the crest surface faces an inner wall of the extruder barrel. A gap or clearance may be formed between the crest surface and the inner wall of the barrel. When the kneading disk is rotating, polymer material is flowing inside this gap or clearance.

When looking onto the kneading disk in the direction the lobe extends radially from the axis of rotation, the crest surface may be a polygon with four edges. The crest surface may be a continuous, for example flat, surface that is limited by the first, second, third and fourth edge.

According to the invention, the first edge extends parallel to the axis of rotation, wherein the first edge has a first radial distance to the axis of rotation. For example, the first edge may be a straight line extended parallel to the axis of rotation.

According to the invention, the third edge extends in a rotational direction at the radial distance to the axis of rotation. For example, the third edge may be a circle segment of a circle around the axis of rotation with a radius equal to the radial distance of the first edge.

According to the invention, all of the crest surface is tapered towards a minimal point at which the second edge and the fourth edge meet, the minimal point having a smaller distance to the axis of rotation than the radial distance. For example, the second and/or the fourth edge may be continuous or may be formed of continuous parts connecting the first or third edge, respectively, with the minimal point. A continuous part may be straight or bent line.

It has to be understood, that the crest surface may then be tapered, when it is not situated on a cylinder around the axis of rotation. This may mean that the second edge and fourth edge are approaching the minimal point which has a distance smaller to the axis of rotation than the first and third edge. The crest surface may be bent from the first edge and the third edge towards the minimal point, but, however may also be a flat surface.

The kneading disk may have the tapered crest surface for improving dispersive mixing and/or lowering the degradation of polymer material inside the screw extruder. The tapered crest surface and the inner surface of the barrel may have a crest angle with respect to each other, for example an angle from 3° to 10°.

The crest surface may be curved, when moving from a point on the first and/or third edge towards the minimal point.

A kneading disk according to the invention may be formed by slightly modifying a crest surface or crest surfaces of a conventional kneading disk. For example, the crest surfaces according to the invention may be formed by cutting crest surfaces of a kneading disk that are parts of a cylinder surrounding the axis of rotation. In other words, the crest surfaces of a conventional kneading disk may be machined away until a crest surface according to the invention is formed.

Modifying the crest surface in this way or forming the crest surface in this way results in opening the clearance between the kneading disk and the extruder barrel and, in the case of a screw extruder with more than one screw, for example a twin screw extruder, like a co-rotating twin screw extruder, the apex side of the opposite kneading disk. The polymer melt may be forced to pass through converging channels (formed by the clearance or the gap) which may extend in axial and/or tangential directions. A polymer melt may experience extensional deformation and/or stretching during drag and/or pressure flow in the clearance and expansion-relaxation when it is pumped to the next converging passage. On the other hand, the increased channel depth may reduce the temperature rise due to viscous dissipation.

Further, the design according to the embodiments of the invention may not worsen the self wiping abilities of the screw extruder. There may be still wiping surface that has not been machined or that has the radial distance to the axis of rotation over the complete width of the kneading disk. In particular, the first edge may wipe the inner surface of the extruder barrel.

According to an embodiment of the invention, the second edge and/or the fourth edge are approaching the axis of rotation towards the minimal point. In other words, the crest surface of the kneading disk is limited by at least two edges that are approaching the minimal point for forming a gap or clearance between the kneading disk and the inner surface of the barrel, when the kneading disk is installed inside a screw extruder.

According to an embodiment of the invention, the second edge and/or the fourth edge, except in one end point, have a distance to the axis of rotation that is smaller than the radial distance. This may make it possible to have a crest surface that only has the maximal radial distance to the axis of rotation in two edges, i.e. in the first and third edge. All of the crest surface except the first and third edge may be less distant to the axis of rotation.

According to claim 1 of the invention, the crest surface, except at the first edge and the third edge, has a distance to the axis of rotation that is smaller than the radial distance.

According to claim 2 of the invention, the second edge and/or the fourth edge and/or the crest surface are declining continuously towards the minimal point. In this case, when the kneading disk is installed inside the extruder barrel of a screw extruder, a continuous gap or clearance is formed such that it is continuously decreasing in one direction with respect to the axis or rotation.

The kneading disk has a central section with a mounting bore for mounting the kneading disk to a shaft of the screw extruder. For example, the central section of the kneading disk may have a hole for mounting the kneading disk on a shaft of the screw extruder.

The kneading disk has axial side surfaces extending parallel to the rotational direction and radial side surfaces extending parallel to the axis of rotation and approaching each other in a radial direction. By approaching each other in a radial direction, the radial surfaces and the axial side surfaces may limit the crest surface at the end of the lobe. As a rule, the crest surface may extend nearly parallel to the cylinder surrounding the axis of rotation, wherein the axial side surfaces and radial side surfaces may extend nearly parallel to the direction in which the lobe extends from the central section of the kneading disk.

Generally, the kneading disk may be formed substantially as a body formed like an ellipse. In this case, two lobes may extend from the central section of the kneading disk.

According to claim 5 of the invention, the lobe is a first lobe and the kneading disk has a second lobe. The first and second lobes may extend in different or opposite radial directions.

A kneading disk may substantially have a rotational symmetry. However, the second lobe may be tapered differently or may be formed like a conventional lobe with a conventional crest surface.

According to claim 6 of the invention, the second lobe has a crest surface that is not tapered. For example, the second crest surface may be a cylinder segment with a radial distance like the first and third edge of the first crest surface of the first lobe.

According to claim 7 of the invention, the second lobe has a crest surface that is tapered like the crest surface of the first lobe.

A further aspect to the invention relates to a screw extruder, for example a twin screw extruder, preferably a co-rotating twin screw extruder.

According to claim 8 of the invention, the screw extruder comprises at least one shaft, for example two shafts in the case of a twin screw extruder, at least one kneading disk adapted to be rotated by the shaft and a barrel accommodating the at least one kneading disk. The screw extruder may further comprise a screw that is also accommodated in the barrel, wherein the screw may be used for conveying a polymer material from a hopper to a die.

According to claim 8 of the invention, the screw extruder is adapted to transport a material through the barrel, the material to be mixed by the at least one kneading disk.

According to claim 8 of the invention, the at least one kneading disk comprises a lobe with a crest surface, wherein the crest surface faces an inner surface of the barrel.

According to claim 8 of the invention, a clearance is formed between the crest surface and the inner surface of the barrel, wherein the crest surface is tapered such that the clearance is converging or widening over the crest surface in a rotational direction.

According to the invention, the crest surface is tapered such that the clearance is widening or converging over nearly almost the crest surface in an axial direction. The axial direction may be defined by the at least one shaft or the two shafts extending parallel in the case of a twin screw extruder one of which is rotating the kneading disk in a direction of rotation. A material, for example polymer blend or compound, entering the clearance between the crest surface and the inner surface of the barrel may be conveyed through the clearance and may be pushed in a direction parallel to the axis of rotation and/or a direction parallel to the axis of rotation.

According to the invention, the crest surface is tapered such that the material inside the clearance is extended or compressed, when the at least one kneading disk is rotated. If the first edge is the leading edge with respect to the rotation of the kneading disk, the clearance or gap may be widening in the direction of rotation and the material inside the clearance may be extended due to the rotation of the kneading disk. When the first edge is a trailing edge with respect to the direction of rotation, the clearance is converging in the direction of rotation and the material inside the clearance may be compressed, when the at least one kneading disk is rotating.

According to the invention, the crest surface may not only be tapered in the direction of rotation but also may be tapered in the axial direction. Thus, when the kneading disk is rotating, the material inside the clearance may also be conveyed in a direction parallel to the axis of rotation and therefore, the kneading disk may pump or convey the polymer material inside the barrel either in the direction to the die or in the direction to the hopper.

According to the invention, the at least one kneading disk of the screw extruder may be a kneading disk as described in the above and in the following.

A further aspect of the invention relates to a use of a kneading disk as described in the above and in the following for a screw extruder for mixing plastic material having a bimodal or multimodal molecular weight distribution.

A further aspect of the invention relates to a method of mixing a first material and a second material with a screw extruder. The first material and the second material may have different molecular weight distributions but may alternatively or additionally comprise a polymer, a mineral filler and/or a colour masterbatch. The kneading disk according to an embodiment of the invention may also better disperse carbon black masterbatches compared to a conventional kneading block and may also help to disperse of mineral fillers in polymeric matrices. In these cases elongational flow as provided by a kneading block according to an embodiment of the invention may be needed for destroying filler agglomerates.

According to the invention, the method comprises the steps of: conveying the first material and the second material to a barrel of the screw extruder containing at least one kneading disk. For example, this may be done with at least one screw of the screw extruder.

According to the invention, the method comprises the step of: mixing the first material and the second material by rotating the at least one kneading disk. As already explained, due to the tapered crest surface, a clearance is formed between the kneading disk and the inner surface of the barrel and the materials inside the barrel are extended or compressed inside the clearance, resulting in a dispersive mixing of the first and second material.

According to the invention, the method comprises the step of: compressing or extending the first material and the second material inside a clearance between a crest surface of a lobe of the kneading disk and an inner surface of the barrel by rotating the kneading disk, wherein the crest surface is tapered such that the clearance is converging or widening over nearly almost the crest surface in a rotational direction.

A further aspect to the invention relates to a kneading block formed of at least two kneading disks. At least one of the kneading disks of the kneading block may be a kneading disk as described in the above and in the following. At least one of the kneading disks may be a conventional kneading disk or for example a kneading disk comprising a cylindrical crest surface.

Combining the modified kneading disk with at least one conventional kneading disk with a non-tapered crest surface in sequence or combining several modified kneading disks as described in the above and in the following in sequence may provide flexibility and a further additional degree of freedom when designing two extruders for specific products and purposes. For example, four kneading disks with tapered crest surfaces may be arranged in sequence on the shaft of the screw extruder, wherein the kneading disks are staggered in either a 30°, 45° or a 90° stagger angle. Further it may be possible, that an arrangement of kneading disks with tapered surfaces is limited by one or two kneading disks with conventional non-tapered surfaces. Also in this case, the kneading disks may be staggered at 30°, 45° or 90°.

To summarize, increasing the clearance by achieving a specific angle between the crest surface and the inner surface of the barrel may create an elongational flow passage, which will improve the dispersive mixing. When the crest surface is tapered in two directions, i.e. in the direction of rotation and in the axial direction, the elongational flow may be in the radial and the tangential direction. Further, the distributive mixing may not be compromised, since the wall shear stress/rate does not change much. Further the pumping ability may not be influenced, since no change of the trailing flight height occurs. However, there may be a huge reduction of the temperature rise due to viscous heating, which in turn may result in a polymer melt having more homogeneous temperature distribution. Further, the flexibility of the design of the screw extruder is enhanced. For example, the extensional rate may be easily altered by changing the conversion angles which may also open up flow channels and/or by changing the arrangement of kneading disks of a kneading block.

These and other aspects of the invention will be apparent from and elucidated with reference to the embodiment described hereinafter.

### BRIEF DESCRIPTION OF THE DRAWINGS

Below, embodiments of the present invention are described in more detail with reference to the attached drawings.
Fig. 1 shows a schematic diagram of a co-rotating twin screw extruder according to an embodiment of the invention.
Fig. 2 shows a cross-section of the co-rotating twin screw extruder of Fig. 1 along the line 2-2, according to an embodiment of the invention.
Fig. 3A, 3B and 3C show a kneading disk from three different directions according to an embodiment of the invention.
Fig. 4 schematically shows the polymer flow inside an extruder barrel according to an embodiment of the invention.
Fig. 5 shows a kneading block according to an embodiment of the invention.
Fig. 6 shows a flow diagram for a method of mixing a first material and a second material according to an embodiment of the invention.
Fig. 7 shows a table with calculated data for different dimensions of the flow channel between a kneading block and the extruder barrel according to an embodiment of the invention.

The reference symbols used in the figures, and their meanings, are listed in summary form in the list of reference symbols. In principle, similar or identical parts are provided with the same reference symbols in the figures.

### DETAILED DESCRIPTION OF EMBODIMENTS

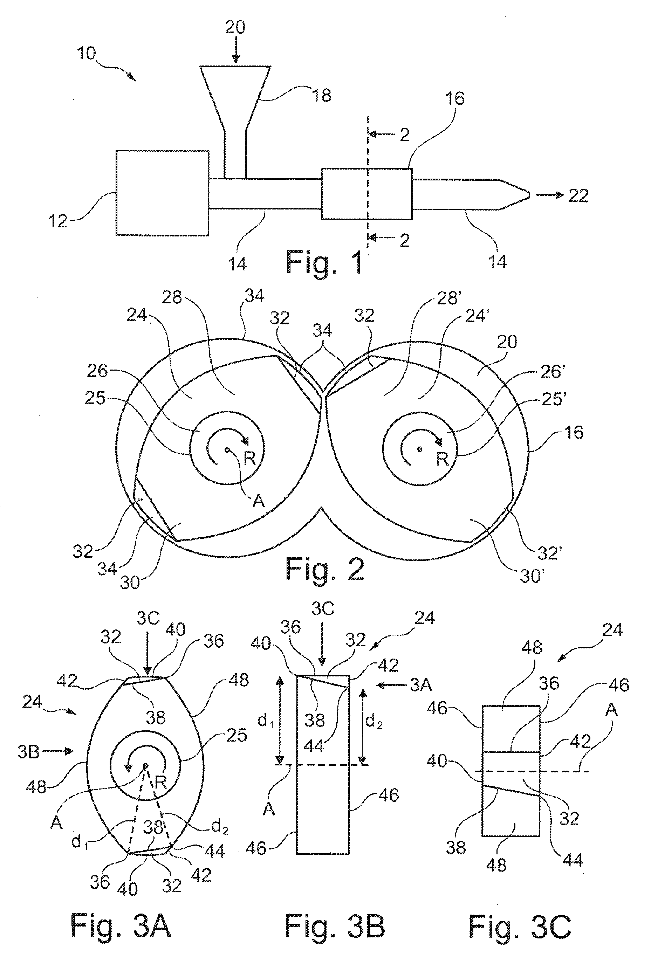

Fig. 1 shows a co-rotating twin screw extruder 10 with an extruder barrel 14 comprising a mixing barrel 16. Two shafts to rotate conveying screws inside the extruder barrel and kneading disks inside the mixing barrel 16 are driven by a gear and motor box 12 of the twin screw extruder 10. The twin screw extruder 10 further has a hopper 18 for receiving polymer material 20 that is conveyed through the extruder barrel 14 and mixing barrel 16 into the direction of a die 22. Inside the mixing barrel 16 several kneading disks are mixing the polymer material 20 which may comprise of a first and second material with different molecular weight and/or mineral filler and/or a colour masterbatch.

Fig. 2 shows a cross-section of the twin screw extruder 10 along the line 2-2 of Fig. 1. As can be seen from Fig. 2, inside the barrel 16, two kneading disks 24, 24' are rotating in a direction of rotation R. The barrel 16 is formed of two cylindrical elements housing the kneading blocks comprising the two kneading disks 24, 24'.

The kneading disk 24 has a hole 25 for receiving a shaft 26 of the twin screw extruder 10 and has a first lobe 28 and a second lobe 30 extending radially from the axis of rotation A. Also the second kneading disk 24' comprises a hole 25' for receiving a shaft 26' of the twin screw extruder 10 and also has two lobes 28', 30'.

The kneading disk 24, at its radial ends of the lobes 28, 30, has two crest surfaces 32 that are tapered with respect to the inner surface 34 of the barrel 16.

The kneading disk 24' only has a tapered crest surface 32 at the first lobe 28'. The other lobe 30' has a crest surface 32' that is not tapered but extends substantially parallel to the inner surface 34 of the barrel 16.

Due to the tapered surface 32, a tapered gap or clearance 34 is formed between the crest surface 32 and the inner surface 34. When the kneading disks are rotating in the direction of rotation R, the plastic material 20 inside the barrel 16 is compressed inside the gap or clearance 34.

Figs. 3A, 3B and 3C show a further embodiment of a kneading disk that is mirror-symmetric to the kneading disk 24 shown in Fig. 2.

Fig. 3A is a view of a kneading disk 24 in the direction of the axis of rotation A. Fig. 3B is a view onto the kneading disk of Fig. 3A into the direction of the arrow 3B in Fig. 3A. Fig. 3C is a view on top of the kneading disk 24 shown in Fig. 3A and Fig. 3B in the direction of the arrow 3C in Fig. 3A and 3B, respectively.

As can be seen best in Fig. 3C, the crest surface 32 is limited by a first edge 36, a second edge 38, a third edge 40 and a fourth edge 42. The edges 36 and 40 have a distance d₁ from the axis of rotation A. A corner 44 of the crest surface 32 has a minimal distance d₂ to the axis of rotation A. The radial distance d₁ may be 20 mm and the radial distance d₂ may be 18 mm. In this case, the gap or clearance 32 is on one end 2 mm wider than on the other end. However, it has to be noted that other dimensions are possible too, for example the dimensions may be scaled. The kneading disk 24 is further limited by two axial side surfaces 46 that are extending orthogonal to the axis of rotation A and two radial side surfaces 48 that are approaching each other when getting distant from the axis of rotation A. The first edge 36 and the third edge 40 are also edges of the radial side surfaces 48, the second edge 38 and the fourth edge 42 are also edges of the axial side surfaces 46.

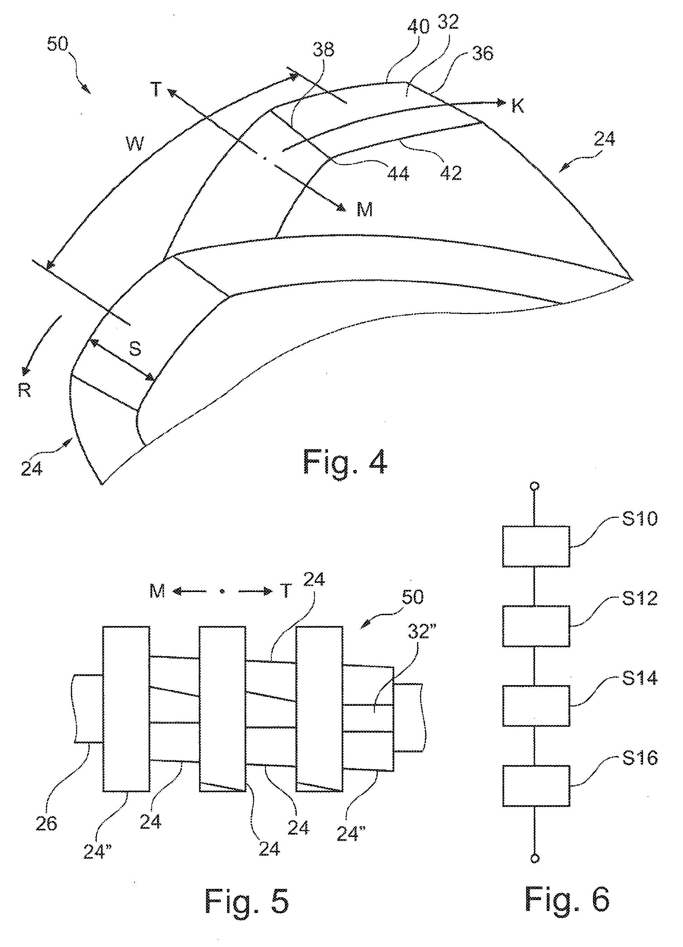

Fig. 4 shows how the polymer melt flows through a kneading disk 24. Due to the tapered crest surface 32, the polymer material 20 inside the barrel 16 is subjected to an elongational rotational flow K in an (anti-)rotational direction and elongational axial flow T in the axial direction. The kneading block 50 shown in Fig. 4 comprises two adjacent kneading disks 24 that have a stagger angle W with respect to each other of 45°. Further the two kneading disks 24 have a width S that may be 11 mm for example. As a rule, the flow T of the polymer material inside the screw extruder 10 in the axial direction is created by the screws of the screw extruder 10. The axial flow T in the axial direction is a flow towards the extruder die 22. The axial flow M in the opposite direction is towards the hopper 18 and is essential for distributive mixing of the polymer material.
The flow K of the material 20 in the rotational direction opposite to the direction of rotation R of the kneading disks 24 may be caused by the rotation of the kneading disks 24. Since the crest surface 32 is also tapered in the rotational direction, the polymer material 20 inside the clearance 34, which is formed by the crest surface 32 and the inner surface 34 of the barrel 16, is subjected to a converging flow which results in a dispersive mixing of the polymer material 20.

There are several relations between these variables. If the stagger angle W is enlarged, the mixing action of the kneading block 50 due to the flow M is also enlarging. However, in this case, the axial flow T in the axial direction, i.e. the transport of polymer material in the direction to the extruder die is reduced.

If the width S of the kneading disks 24 is enlarged, the mixing action due to the flow M and the transport ability of the kneading block 50 due to the flow T is reduced. However, in this case the kneading action of the kneading disks 24 due to the flow K is enlarged.

Fig. 5 shows a further embodiment of a kneading block 50. The kneading block 50 comprises four kneading disks 24 in sequence which are arranged on a shaft 26 with a stagger angle W of 90°. The sequence of kneading disks 24 with tapered crest surfaces 32 is limited by two kneading disks 24" with non-tapered crest surfaces 32', which may be formed like the crest surface 32' of the second lobe 30' of the kneading disk 24' of Fig. 2.

Fig. 6 shows a flow diagram of a method of mixing a first material and a second material with a screw extruder 10 as shown in Fig. 1.

In a step S10, a first material and a second material 20 are put into the hopper 18 of the screw extruder 10 and conveyed to the barrel 16 by a screw of the screw extruder 10.

In a step S12, the first material and the second material are mixed inside the barrel 16 by rotating disks 24 on kneading blocks 50 as shown, for example, in Fig. 4 and Fig. 5.

In a step S 14, the polymer material formed of the first and the second material is compressed and extended inside the barrel 16 due to tapered crest surfaces 32.

In a step S16, the mixed first and second materials are conveyed to the die 22.

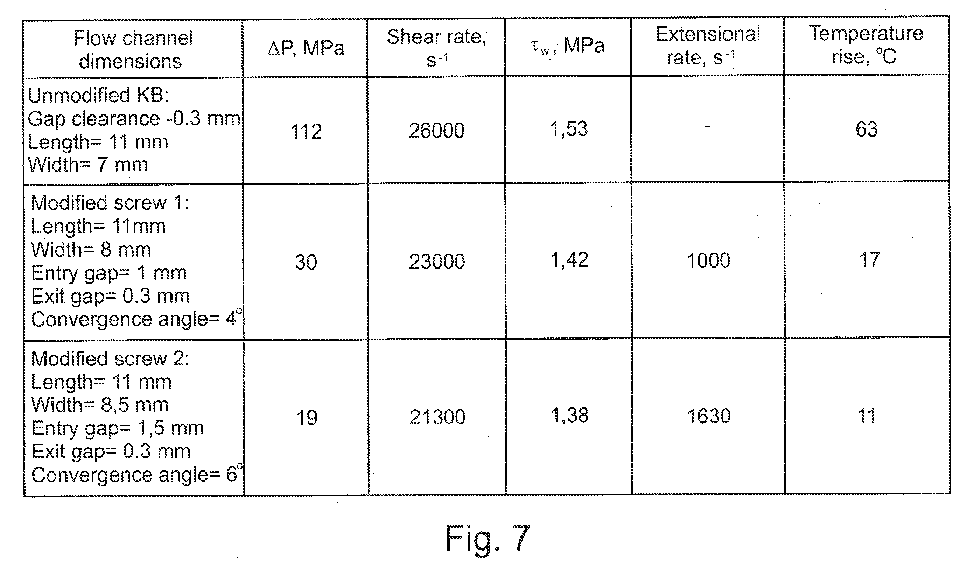

Fig. 7 shows a table with calculations of the shear rate, the shear stress τ_{w}, the pressure drop ΔP, and the temperature rise in the clearance gap of a conventional kneading disk with non-tapered crest surfaces and a modified two-lobe kneading disk with tapered crest surfaces. The calculations are based on a uni-axial flow between parallel plates for the unmodified kneading disk or on a tapered slit for the modified kneading disk under adiabatic conditions and only concerning the pressure-driven flow in one of the clearances between a single kneading disk and the barrel in direction of the extruder die. Rheological data for a conventional HDPE (for example the power-law parameters m, n and the heat capacity) at temperature of 200°C have been taken. The screw channel dimensions of a ZSK-40 two-lobe kneading block are implied in the calculations and it is assumed that the extruder operates at 100 kg/h throughput rate.

For the unmodified kneading disk a gap clearance of 0.3 mm between the crest surface and the inner surface of the barrel has been assumed. The calculations have been performed for a crest surface with a width of 7 mm and a length of 11 mm.

For a first modified kneading disk with a tapered crest surface, an entry gap of 1 mm and an exit gap of 0.3 mm have been taken for the calculation. Due to the different gaps between the entry and the exit of the flowing material, a conversion angle of 4° between the crest surface and the inner surface of the barrel is formed.

For the second embodiment of a modified kneading disk with tapered crest surface a bigger gap of 1.5 mm at the entry has been taken for the calculation. Due to this a conversion angle of 6° is formed between the crest surface and the inner surface of the barrel.

As can be derived from the table, with the modified kneading disks, the pressure drop and the temperature rise is much lower than in the case of an unmodified kneading disk with non-tapered crest surfaces. However, the pressure drop and the temperature rise are much higher compared to the reduction of the shear rate and the shear stress and therefore, the mixing of the polymer material inside the screw extruder with the modified kneading disks is nearly as high as in a screw extruder with unmodified conventional kneading disks but the degradation of the polymer material is much smaller.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: twin screw extruder
- 12: gear and motor box
- 14: extruder barrel
- 16: mixing barrel
- 18: hopper
- 20: polymer material
- 22: die
- 24, 24', 24": kneading disk
- R: rotational direction
- 25, 25': hole
- 26, 26': shaft
- A: axis of rotation
- 28, 28': first lobe
- 30, 30': second lobe
- 32, 32': crest surface
- 34: gap/clearance
- 36: first edge
- 38: second edge
- 40: third edge
- 42: forth edge
- 44: minimal point
- 46: axial side surface
- 48: radial side surface
- K: radial flow
- T, M: axial flow
- 50, 50': kneading block

## Claims

1. A kneading disk (24) for a screw extruder (10)
having at least one lobe (28) extending radially from an axis of rotation (A) of the kneading disk (24);
wherein the lobe (28) has a crest surface (32) limited by a first edge (36), a second edge (38) opposite to the first edge (36), a third edge (40) connecting the first edge (36) and the second edge (38), and a forth edge (42) connecting the first edge (36) and the second edge (38);
wherein the first edge (36) extends parallel to the axis of rotation (A), the first edge (36) having a first radial distance (d₁) to the axis of rotation (A);
wherein the third edge (40) extends in a rotational direction (R) at the radial distance (d₁) to the axis of rotation (R);
wherein substantially all of the crest surface (32) is tapered towards a minimal point (44) at which the second edge (38) and the forth edge (42) meet, the minimal point (44) having a smaller distance (d₂) to the axis of rotation (A) than the radial distance (d₁); and
wherein the crest surface (32), except at the first edge (36) and the third edge (40), has a distance to the axis of rotation that is smaller than the radial distance (d₁).

2. The kneading disk (24) of claim 1,
wherein the second edge (38) and/or the forth edge (42) are approaching the axis of rotation (A) towards the minimal point (44).

3. The kneading disk (24) of claim 1 or 2,
wherein the second edge (38) and/or the forth edge (42), except in one end point, have a distance to the axis of rotation (A) that is smaller than the radial distance (d₁).

4. The kneading disk (24) of one of the preceding claims,
wherein the second edge (38) and/or the forth edge (42) and/or the crest surface (32) are declining continuously towards the minimal point (44).

5. The kneading disk (24) of one of the preceding claims,
wherein the lobe is a first lobe (28);
wherein the kneading disk has a second lobe (30);
wherein the first and second lobes are extending in opposite radial directions.

6. The kneading disk (24') of claim 5,
wherein the second lobe (30') has a second crest surface (32') that is not tapered.

7. The kneading disk (24) of claim 5,
wherein the second lobe (30) has a crest surface (32) that is tapered like the crest surface of the first lobe (28).

8. A screw extruder (10), comprising:
at least one shaft (26);
at least one kneading disk (24) according to one of claims 1 to 7 adapted to be rotated by the shaft (26);
a barrel (16) accommodating the at least one kneading disk (24);
wherein the screw extruder (10) is adapted to transport a material (20) through the barrel (16), the material (20) to be mixed by the at least one kneading disk (24);
wherein the at least one kneading disk (24) comprises a lobe (28) with a crest surface (32), the crest surface (32) facing an inner surface (34) of the barrel (16);
wherein a clearance (34) is formed between the crest surface (32) and the inner surface (34) of the barrel (16),
wherein the crest surface (32) only has a maximal radial distance (d₁) to an axis of rotation (A) in two edges (36, 40), such that the clearance (34) is converging or widening over the crest surface (32) in a rotational direction (R) and the clearance is widening or converging over the crest surface (32) in an axial direction (A).

9. The screw extruder (10) according to claim 8,
wherein the crest surface (32) is tapered such that the material (20) inside the clearance is extended or compressed, when the at least one kneading disk (24) is rotated.

10. The screw extruder (10) according to one of the claims 8 to 9,
wherein the least one kneading disk is a kneading disk (32) according to one of the claims 1 to 7.

11. A use of a kneading disk (24) according to claims 1 to 7 for a screw extruder (10) for mixing plastic material having a bimodal molecular weight distribution.

12. A method of mixing a first material and a second material with a screw extruder, the method comprising the steps of:
conveying the first material and the second material to a barrel of the screw extruder containing at least one kneading disk according to one of claims 1 to 7;
mixing the first material and the second material by rotating the at least one kneading disk;
compressing or extending the first material and the second material inside a clearance between a crest surface of a lobe of the kneading disk and an inner surface of the barrel by rotating the kneading disk, wherein the crest surface (32) only has a maximal radial distance (d₁) to an axis of rotation (A) in two edges (36, 40), such that the clearance is converging or widening over the crest surface in a rotational direction (R) and an axial direction (A).

13. A kneading block (50), comprising:
at least one kneading disk (24) according to one of the claims 1 to 7;
at least one kneading disk (24") comprising a cylindrical crest surface.

## Patentansprüche

1. Knet-Scheibe (24) für einen Schnecken-Extruder (10) mit mindestens einem Nocken (28), der sich radial von einer Rotations-Achse (A) der Knet-Scheibe (24) erstreckt;
wobei der Nocken (28) eine Kamm-Fläche (32) aufweist, begrenzt durch eine erste Kante (36), eine zweite Kante (38), entgegengesetzt zu der ersten Kante (36), eine dritte Kante (40), die die erste Kante (36) und die zweite Kante (38) verbindet, und eine vierte Kante (42), die die erste Kante (36) und die zweite Kante (38) verbindet;
wobei sich die erste Kante (36) parallel zu der Rotations-Achse (A) erstreckt, wobei die erste Kante (36) einen ersten radialen Abstand (d₁) zu der Rotations-Achse (A) aufweist;
wobei die dritte Kante (40) sich in einer Rotations-Richtung (R) bei dem radialen Abstand (d₁) zu der Rotations-Achse (R) erstreckt;
wobei im Wesentlichen die gesamte Kamm-Fläche (32) sich hin zu einem minimalen Punkt (44), an dem sich die zweite Kante (38) und die vierte Kante (42) treffen, verjüngt, wobei der minimale Punkt (44) einen geringeren Abstand (d₂) zu der Rotations-Achse (A) als der radiale Abstand (d₁) aufweist; und
wobei die Kamm-Fläche (32), ausgenommen an der ersten Kante (36) und der dritten Kante (40), einen Abstand zu der Rotations-Achse aufweist, der geringer als der radiale Abstand (d₁) ist.

2. Knet-Scheibe (24) nach Anspruch 1,
wobei die zweite Kante (38) und/oder die vierte Kante (42) sich der Rotations-Achse (A) hin zu dem minimalen Punkt (44) annähern.

3. Knet-Scheibe (24) nach Anspruch 1 oder 2,
wobei die zweite Kante (38) und/oder die vierte Kante (42), ausgenommen in einem End-Punkt, einen Abstand zu der Rotations-Achse (A) aufweisen, der geringer als der radiale Abstand (d₁) ist.

4. Knet-Scheibe (24) nach einem der vorangehenden Ansprüche,
wobei die zweite Kante (38) und/oder die vierte Kante (42) und/oder die Kamm-Fläche (32) sich kontinuierlich zu dem minimalen Punkt (44) hin neigen.

5. Knet-Scheibe (24) nach einem der vorangehenden Ansprüche,
wobei der Nocken ein erster Nocken (28) ist;
wobei die Knet-Scheibe einen zweiten Nocken (30) aufweist;
wobei sich die ersten und zweiten Nocken in entgegengesetzte radiale Richtungen erstrecken.

6. Knet-Scheibe (24') nach Anspruch 5,
wobei der zweite Nocken (30') eine zweite Kamm-Fläche (32') aufweist, die sich nicht verjüngt.

7. Knet-Scheibe (24) nach Anspruch 5,
wobei der zweite Nocken (30) eine Kamm-Fläche (32) aufweist, die sich wie die Kamm-Fläche des ersten Nockens (28) verjüngt.

8. Schnecken-Extruder (10), umfassend:
mindestens eine Welle (26);
mindestens eine Knet-Scheibe (24) nach einem der Ansprüche 1 bis 7 angepasst, um durch die Welle (26) gedreht zu werden;
einen Zylinder (16), der für die mindestens eine Knet-Scheibe (24) Platz bietet;
wobei der Schnecken-Extruder (10) angepasst ist, um ein Material (20) durch den Zylinder (16) zu transportieren,
wobei das Material (20) durch die mindestens eine Knet-Scheibe (24) zu mischen ist;
wobei die mindestens eine Knet-Scheibe (24) einen Nocken (28) mit einer Kamm-Fläche (32) umfasst, wobei die Kamm-Fläche (32) zu einer inneren Oberfläche (34) des Zylinders (16) zeigt;
wobei ein Freiraum (34) zwischen der Kamm-Fläche (32) und der inneren Oberfläche (34) des Zylinders (16) gebildet wird,
wobei die Kamm-Fläche (32) nur einen maximalen radialen Abstand (d₁) zu einer Rotations-Achse (A) in zwei Kanten (36, 40) aufweist, so dass der Freiraum (34) über der Kamm-Fläche (32) in einer Rotations-Richtung (R) zusammenlaufend oder verbreiternd ist und der Freiraum über der Kamm-Fläche (32) in einer axialen Richtung (A) verbreiternd oder zusammenlaufend ist.

9. Schnecken-Extruder (10) nach Anspruch 8,
wobei sich die Kamm-Fläche (32) so verjüngt, dass das Material (20) innerhalb des Freiraums gedehnt oder verdichtet wird, wenn die mindestens eine Knet-Scheibe (24) rotiert.

10. Schnecken-Extruder (10) nach einem der Ansprüche 8 bis 9,
wobei die mindestens eine Knet-Scheibe eine Knet-Scheibe (32) nach einem der Ansprüche 1 bis 7 ist.

11. Verwendung einer Knet-Scheibe (24) nach einem der Ansprüche 1 bis 7 für einen Schnecken-Extruder (10) zum Mischen von Kunststoff-Material mit einer bimodalen Molekular-Gewichts-Verteilung.

12. Verfahren zum Mischen eines ersten Materials und eines zweiten Materials mit einem Schnecken-Extruder, wobei das Verfahren die Schritte umfasst von:
Transportieren des ersten Materials und des zweiten Materials zu einem Zylinder des Schnecken-Extruders, der mindestens eine Knet-Scheibe nach einem der Ansprüche 1 bis 7 enthält;
Mischen des ersten Materials und des zweiten Materials durch Rotieren der mindestens einen Knet-Scheibe;
Verdichten oder Dehnen des ersten Materials und des zweiten Materials in einem Freiraum zwischen einer Kamm-Fläche von einem Nocken der Knet-Scheibe und einer inneren Oberfläche des Zylinders durch Rotieren der Knet-Scheibe, wobei die Kamm-Fläche (32) nur einen maximalen radialen Abstand (d₁) zu einer Rotations-Achse (A) in zwei Kanten (36, 40) aufweist, so dass der Freiraum über der Kamm-Fläche in einer Rotations-Richtung (R) und einer axialen Richtung (A) zusammenlaufend oder verbreiternd ist.

13. Knet-Block (50), umfassend:
mindestens eine Knet-Scheibe (24) nach einem der Ansprüche 1 bis 7;
mindestens eine Knet-Scheibe (24"), umfassend eine zylindrische Kamm-Fläche.

## Revendications

1. Disque de malaxage (24) pour une extrudeuse à vis (10)
comportant au moins un lobe (28) qui s'étend radialement à partir d'un axe de rotation (A) du disque de malaxage (24) ;
étant précisé que le lobe (28) a une surface de crête (32) qui est délimitée par une première arête (36), une deuxième arête (38) opposée à la première arête (36), une troisième arête (40) qui relie la première arête (36) et la deuxième arête (38), et une quatrième arête (42) qui relie la première arête (36) et la deuxième arête (38) ;
étant précisé que la première arête (36) s'étend parallèlement à l'axe de rotation (A), la première arête (36) présentant une première distance radiale (d₁) par rapport à l'axe de rotation (A) ;
que la troisième arête (40) s'étend dans un sens de rotation (R) à la distance radiale (d₁) de l'axe de rotation (A) ;
que pratiquement toute la surface de crête (32) est effilée en direction d'un point minimal (44) où la deuxième arête (38) et la quatrième arête (42) se rejoignent, le point minimal (44) présentant une distance (d₂) par rapport à l'axe de rotation (A) qui est plus petite que la distance radiale (d₁) ; et
que la surface de crête (32), sauf au niveau de la première arête (36) et de la troisième arête (40), présente par rapport à l'axe de rotation une distance qui est plus petite que la distance radiale (d₁).

2. Disque de malaxage (24) de la revendication 1, étant précisé que la deuxième arête (38) et/ou la quatrième arête (42) se rapprochent de l'axe de rotation (A) en direction du point minimal (44).

3. Disque de malaxage (24) de la revendication 1 ou 2,
étant précisé que la deuxième arête (38) et/ou la quatrième arête (42), sauf à un point d'extrémité, présentent par rapport à l'axe de rotation (A) une distance qui est plus petite que la distance radiale (d₁).

4. Disque de malaxage (24) de l'une des revendications précédentes,
étant précisé que la deuxième arête (38) et/ou la quatrième arête (42) et/ou la surface de crête (32) vont en descendant de manière continue en direction du point minimal (44).

5. Disque de malaxage (24) de l'une des revendications précédentes,
étant précisé que le lobe est un premier lobe (28) ;
que le disque de malaxage présente un second lobe (30) ;
que les premier et second lobes s'étendent dans des directions radiales opposées.

6. Disque de malaxage (24') de la revendication 5, étant précisé que le second lobe (30') présente une seconde surface de crête (32'), qui n'est pas effilée.

7. Disque de malaxage (24) de la revendication 5, étant précisé que le second lobe (30) présente une surface de crête (32) qui est effilée comme la surface de crête du premier lobe (28).

8. Extrudeuse à vis (10) comprenant :
au moins un arbre (26) ;
au moins un disque de malaxage (24) selon l'une des revendications 1 à 7, apte à tourner grâce à l'arbre (26) ;
un cylindre (16) qui loge au moins un disques de malaxage (24) ;
étant précisé que l'extrudeuse à vis (10) est apte à transporter une matière (20) à travers le cylindre (16), la matière (20) étant mélangée au moins un les disques de malaxage (24) ;
que au moins un disques de malaxage (24) comprennent un lobe (28) avec une surface de crête (32), la surface de crête (32) faisant face à une surface intérieure (34) du cylindre (16) ;
qu'un espace (34) est formé entre la surface de crête (32) et la surface intérieure (34) du cylindre (16),
que la surface de crête (32) ne présente une distance radiale maximale (d₁) par rapport à un axe de rotation (A) que dans deux arêtes (36, 40), de sorte que l'espace (34) converge ou s'élargit sur la surface de crête (32) dans un sens de rotation (R) et que l'espace s'élargit ou converge sur la surface de crête (32) dans un sens axial (A).

9. Extrudeuse à vis (10) selon la revendication 8, étant précisé que la surface de crête (32) est effilée, de sorte que la matière (20) qui se trouve à l'intérieur de l'espace est étirée ou comprimée quand le ou les disques de malaxage (24) tournent.

10. Extrudeuse à vis (10) selon l'une des revendications 8 à 9,
étant précisé que au moins un disques de malaxage est des disques de malaxage (32) selon l'une des revendications 1 à 7.

11. Utilisation d'un disque de malaxage (24) selon les revendications 1 à 7 pour une extrudeuse à vis (10) pour mélanger une matière plastique qui présente une répartition de poids moléculaire bimodale.

12. Procédé pour mélanger une première matière et une seconde matière à l'aide d'une extrudeuse à vis, le procédé comprenant les étapes qui consistent :
à transporter la première matière et la seconde matière jusqu'à un cylindre de l'extrudeuse à vis qui contient au moins un disque de malaxage selon l'une des revendications 1 à 7 ;
à mélanger la première matière et la seconde matière en faisant tourner au moins un disques de malaxage ;
à comprimer ou étirer la première matière et la seconde matière à l'intérieur d'un espace entre une surface de crête d'un lobe du disque de malaxage et une surface intérieure du cylindre en faisant tourner le disque de malaxage, étant précisé que la surface de crête (32) ne présente une distance radiale maximale (d₁) par rapport à un axe de rotation (A) que dans deux arêtes (36, 40), de sorte que ledit espace converge ou s'élargit sur la surface de crête dans un sens de rotation (R) et un sens axial (A).

13. Bloc de malaxage (50) comprenant :
au moins un disque de malaxage (24) selon l'une des revendications 1 à 7 ;
au moins un disque de malaxage (24") comprenant une surface de crête cylindrique.
